# EUROPEAN PATENT SPECIFICATION

(11) **EP 0 862 674 B1**
(45) Date of publication and mention of the grant of the patent: **27.12.2000**
(21) Application number: 96936591.5
(22) Date of filing: 16.10.1996
(51) Int. Cl.: E04B 2/00, E04F 13/06, B23B 31/00

(54) **APPARATUS USED FOR FINISHING DRYWALL SEAMS**
VORRICHTUNG ZUR ENDBEARBEITUNG VON FUGEN IN DER TROCKENBAUWEISE
DISPOSITIF POUR LA FINITION DE JOINTS EN MACONNERIE SECHE

(30) Priority: 17.10.1995 US 544339; 18.09.1996 US 718137
(43) Date of publication of application: 09.09.1998
(73) Proprietor: Drywall Systems International Inc., Woodinville, WA 98072 (US)
(72) Inventor: SMYTHE, Timothy, D., Jr., Waikola, HI 96738 (US)
(74) Representative: Lawrence, Malcolm Graham
(86) International application number: US9616600
(87) International publication number: WO9714856

(56) References cited:
- AU-B- 153 625
- US-A- 2 234 701
- US-A- 3 090 087
- US-A- 3 109 207
- US-A- 4 520 055
- US-A- 5 131 198

## Description

### Technical Field

This invention relates generally to the field drywall construction and more particularly to an apparatus used for finishing exterior and/or interior drywall seams and corners that greatly reduce the amount of time and labor required to finish a modern structure.

### Background Art

Gypsum drywall board is commonly used in modern construction. Manufactured drywall sheets are nailed to studs to form interior walls and ceilings. Before these sheets can be painted or textured, the joints are taped and sealed with joint sealing compound (drywall mud). This is a tedious process since first tape and mud must be dispensed with a tool known, and then the worker must roll and glaze the tape while the mud is wet.

An alternative to taping, especially in seams that do not meet at 90 degrees, is the use of a product generally called "flex bead." Flex bead may be two thin strips of metal bonded to a narrow paper tape. To use "flex bead", a worker first spreads mud along the wallboard on both sides of the angle. A length of "flex bead" is folded by hand to create a crease. The bead is then installed in the angle. The "flex bead" will not make a straight line by itself, so the worker must move the bead around to the best of his abilities to set it as straight as possible. This is time consuming.

Once the "flex bead" is installed and dry, it must be coated with finishing mud. Most workers only coat one side of the angle at a time. If one tries to coat both sides at the same time, the mud flops over to the other side, and the knife digs a line into the mud on the other side of the angle. The following process is usually used: 1) Apply the first coat of mud to one side and wait until it is dry; 2) Apply the first coat of mud to the other side and wait until it is dry; 3) Sand both sides and clean at the crease; 4) Apply the second coat of mud to one side and wait until it is dry; 5) Apply the second coat of mud to the other side and wait until it is dry; 6) Sand and touch up both sides.

In addition to "flex bead", there are other corner beads in common use. These include both straight and "bullnose" or rounded versions. These are used on exterior corners at windows and other openings. To use such a corner bead, it must be cut from a standard length of 2.44 metres (m) or 3.05 m (8 or 10 feet). It is nailed into position using short nails approximately every 0.3 m (1 foot). Once the bead is installed, the worker must coat the bead. This is very labor intensive, and it uses a large amount of mud. After the first coat, the mud is allowed to dry for about a day.

After the first coat is dry throughout the building, it must be sanded, and all the metal edges must be cleaned. After this sanding the worker proceeds to a second coat, repeating the entire process again and waiting another day to dry. The worker finally must again sand the bead carefully looking for imperfections, and touching these up. At this point, the bead is ready for texture or paint. The entire process uses considerable mud, and is very labor intensive, especially the sanding. In terms of total construction time, it usually requires two to three days to complete all the corners of a typical residence.

US3090087 (Miller) relates to stock material for use as edging strips for edging and protecting the corners of building structures, and more particularly for use as edging strips for corners formed by two walls meeting at an angle, usually a right angle. US2234701 (Lyman) relates to corner constructions for panels formed of wallboard and the like and particularly to corner constructions which serve to present a surface to which wallpaper, paint, fabric or other flexible wall covering materials may be applied without using the usual corner moulding and without danger of cracks being formed in the corners on expansion and contraction or other relative movement of the panels, forming the corner. AU153625 (Dunlap) concerns crowning assemblies, particularly adapted for use in dry wall construction on an outside corner formed by two angularly disposed abutting sheets of wall board.

### Disclosure of the Invention

The invention relates to a drywall finishing apparatus that includes inside and outside, multi-angle, non-coatable flex trim, and non-coatable corner bead that forms 1) normal corners, 2) stub wall or closet corners, 3) window wrap corners, and 4) L-metal for window sills and areas where drywall ends against some other surface like brick. In addition, the apparatus includes accessory products for each of the pieces mentioned. The term non-coatable means that the piece does not need to be coated with mud; it is ready to receive paint or texture directly. Of course, it can be coated if desired.

According to a first aspect of the present invention there is provided an apparatus used for finishing interior drywall seams in modern construction where drywall sheets are nailed to studs to form finished interior walls, comprising: an elongated laminate strip having a first and second exterior surface, the elongated laminate strip comprising: a first flexible layer; a second flexible layer; a semi-rigid support layer bonded between said first and second flexible layer; characterised by: a groove cut longitudinally in said first exterior surface along the length of said laminate strip; said laminate strip folded along said groove to form two flanges, said flanges making an acute angle with respect to said second exterior surface, each of said flanges having edges beveled on said second exterior surface to allow application of drywall mud, whereby said second exterior surface is prepared to receive paint or texture, and said first exterior surface contacts said drywall seam.

In a second aspect of the present invention there is provided an apparatus used for finishing exterior drywall seams in modern construction where drywall sheets are nailed to studs to form finished walls, comprising: an elongated laminate strip having a first and second exterior surface, the elongated laminate strip comprising: a first layer of flexible material; a second layer of flexible material; a semi-rigid support layer bonded between said first and second layers; characterised by: a groove cut longitudinally in said first exterior surface along the length of said laminate strip, said groove being scored along its length; said laminate strip folded along said scored groove to form two flanges, said flanges making an acute angle with respect to said first exterior surface, each of said flanges having edges beveled on said second exterior surface to allow application of drywall mud, whereby said second exterior surface is prepared to receive paint or texture, and said first exterior surface contacts said drywall seam.

The invention eliminates most of the intense labor associated with present methods since none of the parts need to be coated with mud or sanded. In addition, the parts form straight, finished lines and angles as soon as they are installed.

The corner bead and flex trim pieces can be installed by simply placing them on top of a coat of applied mud at a corner. The corner can be an exterior or interior angle. No nails are required, since the pieces stick to the mud. The pieces are paper, plastic, or other suitable material for texturing and painting. They can be tapered or beveled or both on their edges to blend into the adjacent wall when the edges are "killed" with a wide blade knife and a small amount of mud. "Killing" the edges refers to using a small amount of mud on the edges of pieces and wiping that mud into a thin layer so that it blends flush with the adjacent wall material.

To install one of the embodiments of the invention, it is selected from stock and cut to length if not exactly the right length. A coat of mud is applied to both sides of an exterior or interior angle, and the device is placed over the mud and smoothed into place. Since it is preformed, the piece makes a straight line at the required angle. Once, the piece is in place, the edge can be "killed" once with a small amount of mud and a wide blade. At that point the corner is complete except for drying. It does not need to be sanded or touched up. When dry, it can be directly textured or painted. For extra perfection the worker can return after the piece is dry and kill the edge one more time.

### Brief Description of the Drawings

FIGURE 1 shows an interior flex-trim corner piece. Figure 1A is a perspective view; Figure 1B is an end view.

FIGURE 2 shows a cross section of a 3 layer interior flex trim piece.

FIGURE 3 shows an exterior flex-trim corner piece. Figure 3A is a perspective view; Figure 3B is an end view.

FIGURE 4 shows a cross section of a 3 layer exterior flex trim piece.

FIGURE 5 shows a cross section of a 5 layer flex trim piece.

FIGURE 6 shows an embodiment that forms a specialty piece for a natural corner.

FIGURE 7 shows a stub wall or closet opening trim.

FIGURE 8 shows a sub wall or closet specialty piece.

FIGURE 9 shows an embodiment of window trim.

FIGURE 10 shows a specialty piece for window trim.

FIGURE 11 shows an embodiment of an L-metal piece.

### Best Mode of Carrying Out the Invention

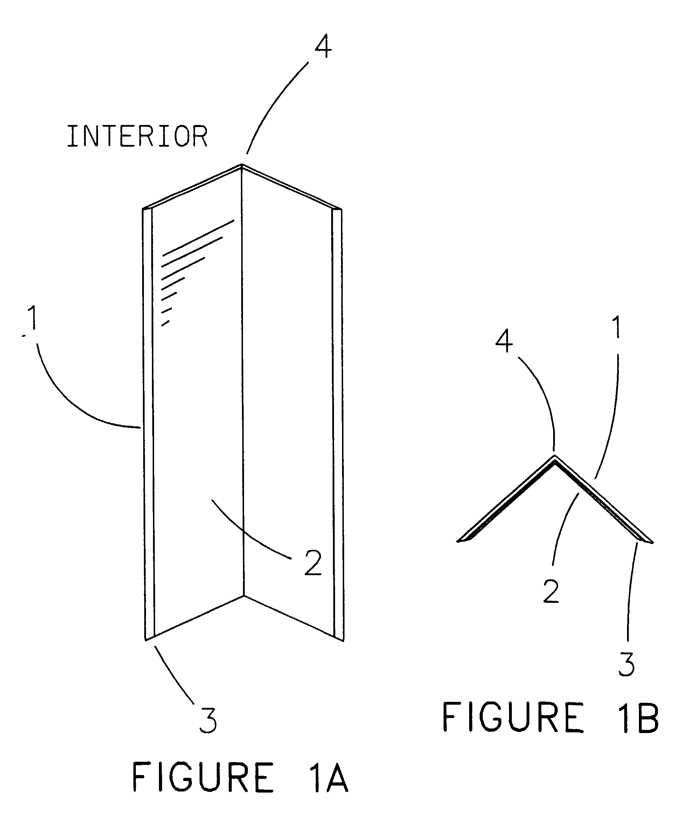

Figure 1A depicts a no-coat interior flex-trim corner. Figure 1B is an end view of the piece from Figure 1A. The piece may be a strip of laminate material formed into two flanges of suitable material forming a first surface (1) made from preferably paper or other material. The interior of the material is generally a lamination of paper and plastic or some other semi--rigid support material. A second, finished interior surface (2) is usually paper. The stock flex-trim is folded (4) to form a corner. Folding can be accomplished with the interior flex-trim by cutting a groove along the length of a stock piece near its center line on the surface that will face the drywall. This groove can penetrate approximately half way through the material.

The width of each flange on interior flex-trim can be from 2,5 centimetres (cm) to 20,3 cm (1 to 8 inches), with a preferred size being around 6.4 cm (2.5 inches); however, this size is not critical, and other sizes can be used from less than 2.5 cm (1 inch) to wider than 50.8 cm (20 inches). The pieces can be supplied in standard 2.44 m or 3.05 m (8 or 10 foot) lengths, or any other length that is convenient. They can also be supplied on 30.48 m (100 foot) or other length rolls. The thickness of the total laminate can be from thinner than 0.025 cm (0.010 inches) to greater than 1.59 cm (0.625 inches). A three layer interior laminate can be made with outer paper layers between 0.05 millimetres (mm) and 1.02 mm (2 and 40 mils) thick, and an inner plastic layer between 0.05 mm and 1.02 mm (2 and 40 mils) in thickness. The preferred thickness of the outer paper layers is around 0.28 mm (11 mils), and the preferred thickness of the semi-rigid support layer is between 0.15 mm to 0.38 mm (6 to 15 mils).

The edge (3) of the flange may be tapered or beveled to better merge into the wallboard when the edge is "killed". Beveling may be accomplished by passing the strips past rotating blades that cut around 8 degrees from the horizontal. This leads to a bevel around 0.6 cm (1/4 of an inch). These numbers are approximate; many other angles or bevel widths could be used. The outer surface of the flanges can be both tapered and beveled to better effect and edge if desired.

A feature of the invention is the ability to "kill" the edge 3 with a small amount of mud and a tool such as a wide blade knife. In this process the mud can be spread into an extremely thin layer over the edge to merge the edge into the surrounding wallboard. This step is usually performed right after the desired piece is put into place. After this step, the installation of the piece is complete. No nails or other fastening means need be used. The pieces can be simply stuck on to the wet mud or other adhesive. Of course nails or other fastening means may be used if desired, and a version of the present invention using nails could be made; An embodiment of the present invention can also be fabricated using adhesive to hold it in place if desired. This adhesive can be water soluble.

The interior surface (2) is finished and ready to receive paint or texture. The drywall installer only needs to wait for the original mud to dry to have a finished job. Usually, to get a perfect "kill" of the surface, the drywaller returns a second time to just touch up the killed surfaces, although this is not always necessary.

The interior of the laminate strips may contain plastic, metal, or other material bonded or glued internally to give the structure rigidity and support. The total lamination results in a very strong corner or seam. The fact that the corner piece can be preformed prevents the corner from wandering away from true even when the underlying construction is imperfect.

The outside seams or corners can be straight or bullnose of any radius, or any other shape. Bullnose corner beads of the conventional type are popular in residential construction. Bullnose pieces are simply fitted with a bullnose strip on the outside of the corner seam.

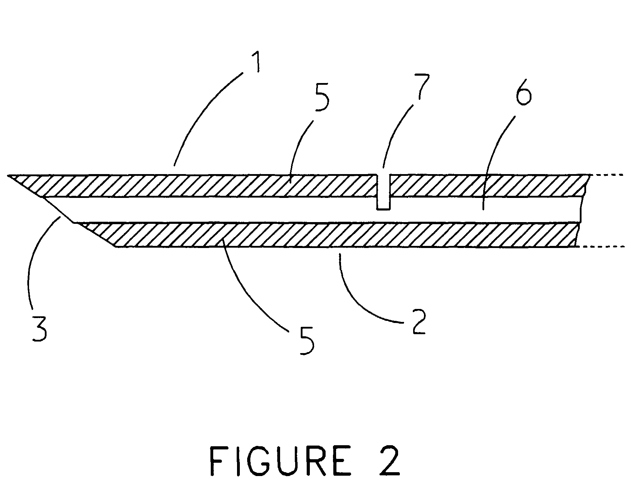

Figure 2 shows a cross-section of the interior flex-trim from Figure 1. The first or drywall side surface (1), and the interior finished surface (2) are depicted. The outer surface can be made from 11 point ie. 0.28 mm (11 mil) cup stock paper board or other water resistent paper. The thickness is not critical and may be changed. The stock flex-trim piece can be made as a laminate of three, five, or more layers. Figure 2 shows a three layer laminate.

In Figure 2, the inside (wallboard) surface (1) of interior flex-trim can be made from 11 point ie. 0.28 mm (11 mill), water resistent, cup stock or other convenient thickness or paper. This paper is similar to that used to manufacture paper cups, and is water resistent. A center layer (6) can be made from high impact polystyrene plastic or other suitable semi-rigid material. Its thickness can be around 0.4 mm (15 mils) or other convenient thickness. This center layer provides support and rigidity for the structure.

The outside layer (facing the room) (2) can be made from paper similar to the inside layer. There is no need for both paper surfaces (5) to have the same thickness. For interior flex-trim, one or more notches or grooves (7) can be cut to a depth around halfway through the laminate to facilitate folding. This groove may be cut during manufacture by passing a stock strip past a blade, or it may be done in the field by the drywall installer. Additional grooves to facilitate stub walls and other structures can be cut with a special tool in. the field.

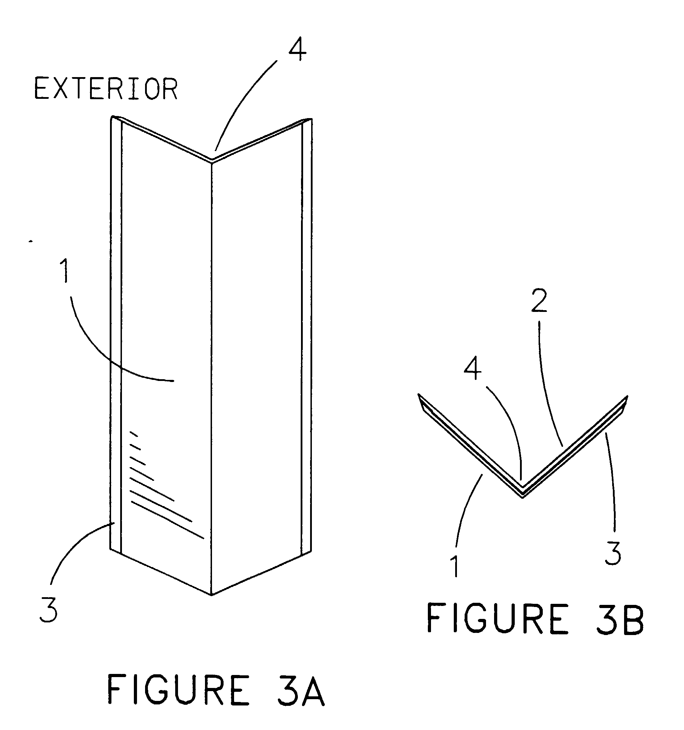

Figure 3A shows an embodiment of the present invention designed to be used as exterior flex-trim. That is, this material can be used to finish exterior seams and corners. Figure 3B is an end view of the piece shown in Figure 3A. Here, the first surface (1) is the finished surface that is designed to receive paint or texture. The second surface (2) is next to the wallboard. There is a formed corner (4) which can be prepared in the stock material or cut in the field to meet the specifications of a particular job. The edges (3) can be tapered or beveled so that they can be "killed" with drywall mud as with the interior flex-trim. For some trims, especially exterior, it is desirable to both taper and bevel. Here the support material is tapered being thicker in the center (where the fold is), and thinner on the outer edges. This material can then be further beveled with a cutting tool.

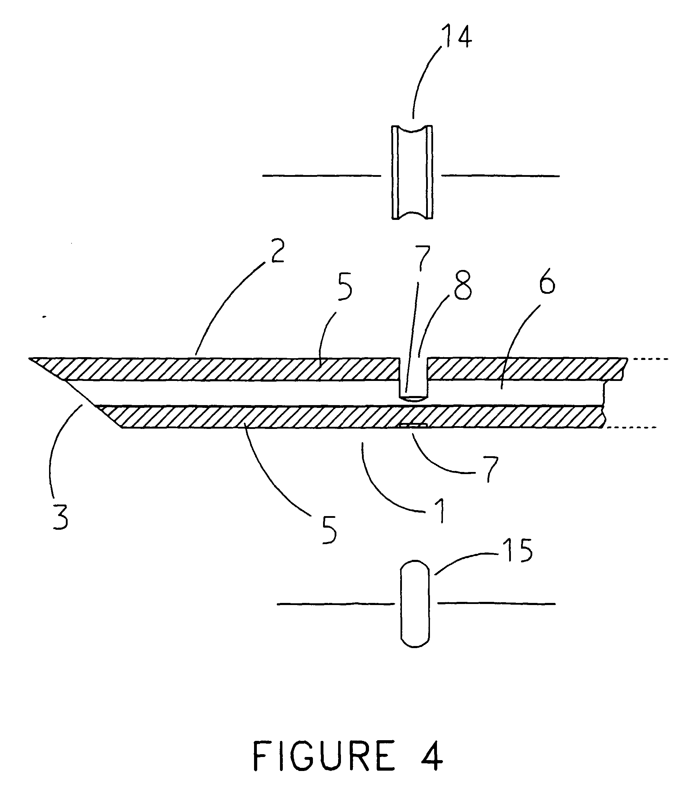

Figure 4 shows a cross section of a three layer version of the laminate material used to the form exterior flex-trim of Figure 3. The inner and outer surfaces (2) and (1) are seen. The three layer laminate can be made of outer layers of paper (5), with a center layer of plastic (6) or other material suitable to provide rigidity. Exterior flex-trim is generally made heavier than interior flex-trim, but this is not always necessary. The exterior flex-trim is usually fabricated with wider flanges than interior flex-trim that are from 5.1 cm to 38.1 cm (2 to 15 inches), with around 10.2 cm (4 inches) preferred. The layers in the laminate can be from 0.05 mm to 1.02 mm (2 to 40 mils) thick with 0.38 mm (15 mils) being preferred for the paper layers and 1.02 mm (40 mils) being preferred for the support layer(s).

Since the exterior flex-trim is usually thicker than the interior flex-trim, a groove, and in addition a score, can be made to facilitate folding. A groove (8) can be made in the face that will contact the drywall similar to the case with interior flex-trim. In addition, the bottom of the groove (8) may be scored (7) with a male/female scoring tool (14)(15). This is done by running the tool with the laminate strip pinched between its two parts. The female part of the scoring tool (14) runs in the bottom of the groove (8) while the male part of the tool (15) runs on the back side of the strip directly behind the groove (8). This scoring operation, while optional, is recommended to make the piece easier to bend along the groove. Figure 4 also shows the scoring tool with the female part (14) above the laminate, and the male part (15) below the laminate. During the actual scoring operation, the two parts are brought together to pinch the laminate fabric.

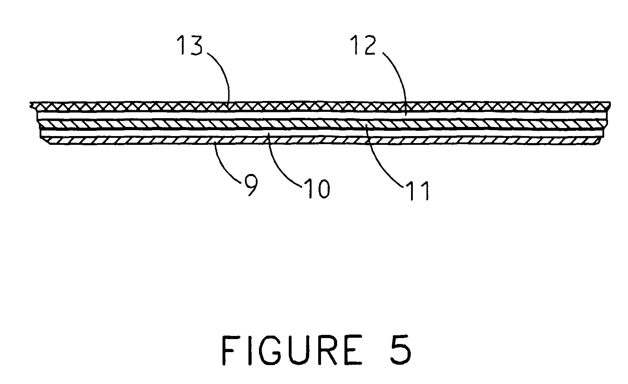

Figure 5 shows a five layer laminate structure. Laminates of any convenient number of layers can be used to create the present invention. The laminate shown in Figure 5 can be used for interior or exterior flex-trim. The layer near the wallboard (9) can be made from very thin paper 0.03-0.15 mm (1-6 mils). The next layer (10) can be plastic around 0.15 mm (6 mils) for rigidity. The third layer (11) can be again paper from around 0.10-0.31 mm (4-12 mils). The next layer (12) can again be plastic around 0.15 mm (6 mils) in thickness. The final layer (13) which is the layer that faces the room when installed can be made from heavier paper designed to take paint or texture. It can be from around 0.25 mm (10 mils) to around 0.50 mm (20 mils) with 0.36 mm (14 mils) being preferred. It should be noted that these dimensions are only approximate. Many other dimensions and combinations of material can be used.

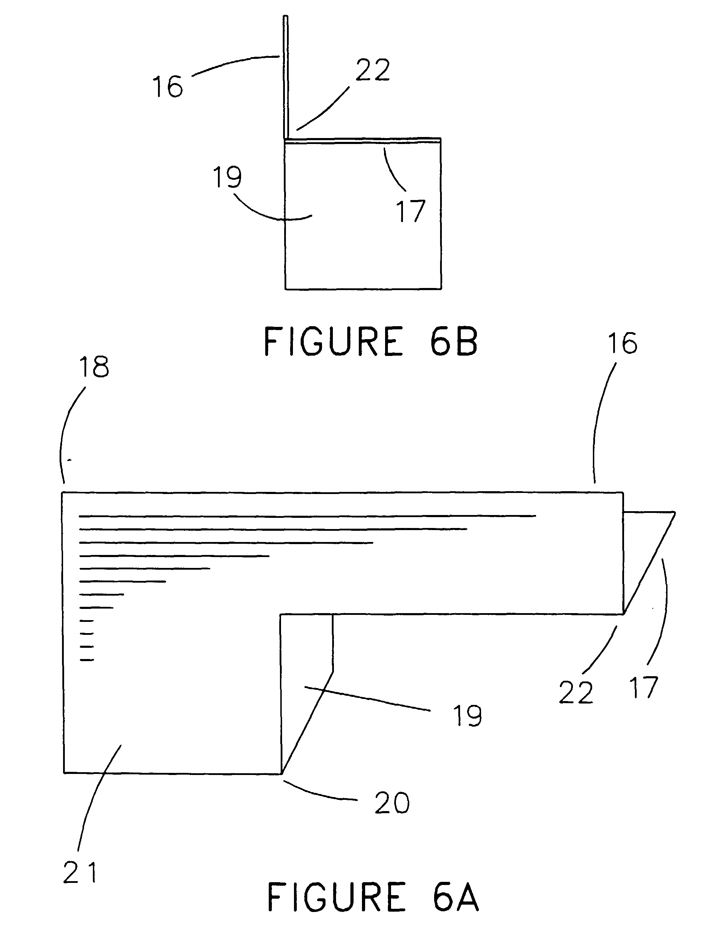

Figure 6 shows a specialty piece for corners that can be used in conjunction with the flex-trim shown in figure 1. The piece is shaped to be used where two right angle walls join a ceiling at an opening. An outer flat flange (21) fits the higher wall and extends over the opening. A second flat piece (19) runs into the vertical wall forming the opening and also runs along the top of the inside of the opening (17). The angle between the wall parts (20) and the angle between the top of the opening and the wall (22) should be around 89 degrees for a right angle apparatus; however, parts can be manufactured with any angles for special requirements or special construction angles. The specialty piece can be any length; however it is preferably around 17.8 cm (7 inches) along the short sides, and around 25.4 cm (10 inches) along the longer sides. The exterior seams can be straight or bullnose or other shape. The outside corners (18) are usually cut at around 90 degrees. The edge (16) and other edges can be tapered or beveled or both.

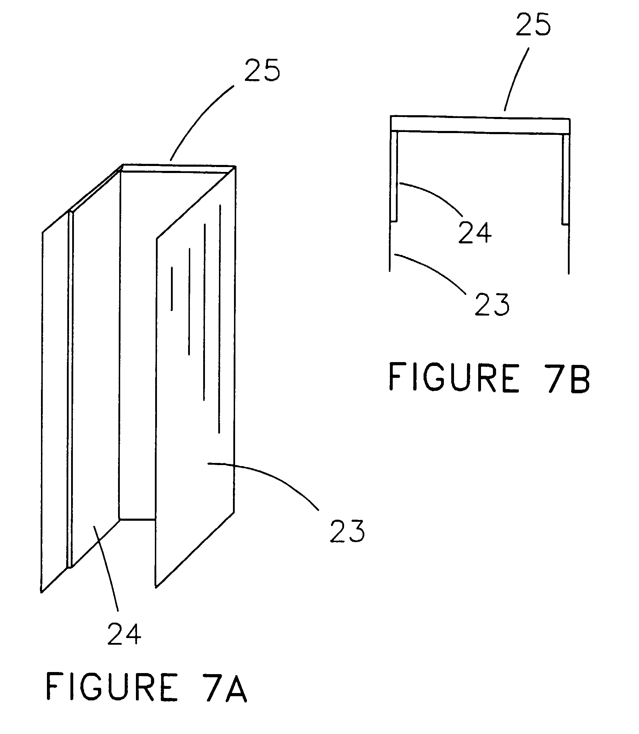

Figure 7 shows a stub wall or closet opening no-coat trim piece. Its length can be a standard 2.44 m or 3.05 m (8 foot or 10 foot), or it can be any length. It is made of two long, approximately parallel flanges (23) of similar construction to other embodiments already described, with an inner support member (24). These flanges can be paper or other suitable material, and the support member can be plastic or other material for rigidity. The plastic can be molded or extruded. The flange thickness is similar to the flanges shown in figure 1. In this embodiment, the flanges are coupled to a flat back piece (25). The back piece can contain a spacer if necessary. This spacer is used to eliminate the need to wrap the opening with drywall.

This piece is used for typical closet doors and stub walls (walls that end in a room). The invention caps the wall or door. The back piece (25) can be different widths (distance between the flanges (23)) depending on the construction. In the case of a 8.9 cm (3 1/2 inch) stud and two 1/2 sheets of drywall, the back piece (25) would be around 11.4 cm (4 1/2 inches) wide. In the case of the same stud with two 5/8 sheets of drywall, the width would be around 12.1 cm (4 3/4 inches). Different versions of this piece can be made for typical construction situations; specialized versions can be made for any situation.

The width of the flanges (23) can be between 7.6 cm (3 inches) and 38.1 cm (15 inches), with about 15.2 cm (6 inches) being preferred. The thickness of the back piece (25) can be around 1.0 cm (3/8 inch) to form a finished wall. This thickness is not critical to the invention, and many other thicknesses are possible. As with other embodiments of the present invention, the piece is first attached with wet finishing mud, and then the edges are "killed" or made to merge into the surrounding drywall with a flat blade tool. The edges are optionally tapered to merge better.

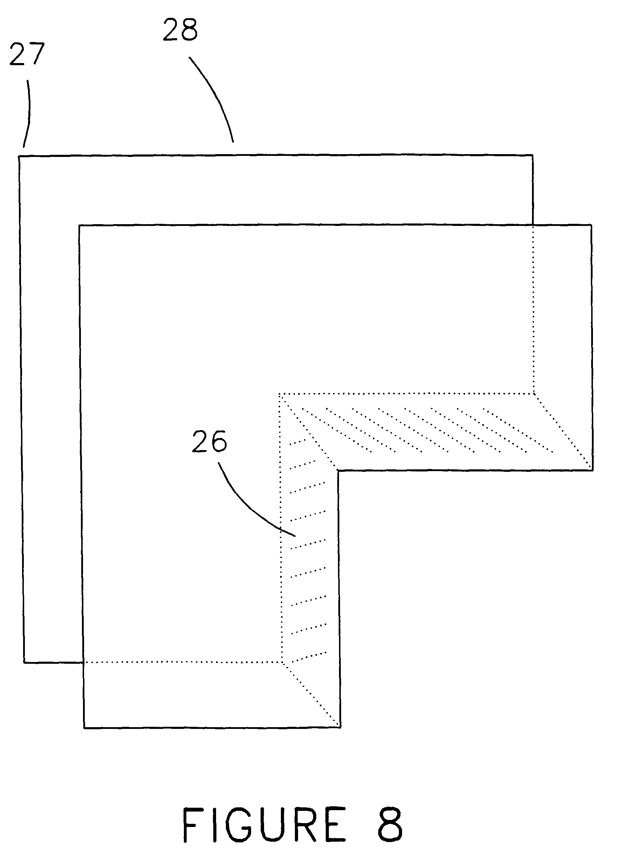

Figure 8 shows another specialty wall piece. This piece is used where the wall or door previously described meets the ceiling. This piece simply continues the previous piece through the wall ceiling transition. The flanges (28) continue the design around the transition. The back spacer (26) is made to have two parts. This piece can be made entirely from plastic, paper, cardboard or any other suitable material. The back piece (26) should have thickness to match that of the piece of Figure 7 which it transitions from. The outside seams can be straight or bullnose or any other specialty shape. The outside corners of the piece (27) do not have to be square, but may be rounded to make them easier to "kill". The preferred size is around 17.8 cm (7 inches) on the bases, around 7.6 cm (3 inches) in the corners, and around 25.4 cm (10 inches) on the long sides 15. The width 16 can vary for different types of construction.

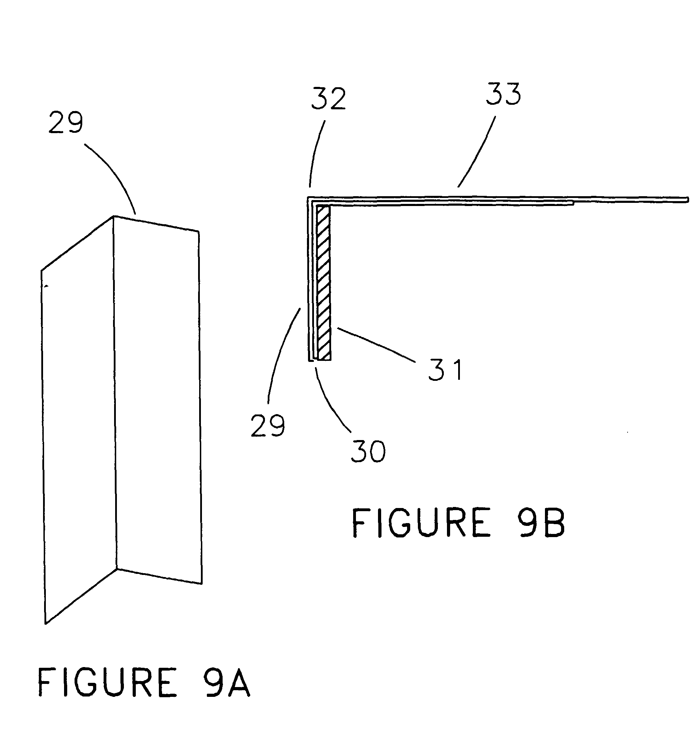

Figure 9 shows a window trim piece. This piece is used to provide a transition from wall drywall to a window. This piece is similar to the other pieces with two substantially flat flanges (33)(29) forming an approximate 90 degree angle or other specialty angle of any number of degrees. The actual angle (32) is chosen around 89 degrees for a right angle apparatus for reasons previously explained. Again a support member (31) is used inside the flanges for rigidity. As in other embodiments, this piece can be plastic or other rigid material. It is used to give strength and shape to the piece. One of the flanges contains a spacer (30) of the type previously described. This spacer is used to eliminate the need to wrap the opening with drywall. The window piece is constructed so that one flange (33) is from around 7.6 cm (3 inches) to around 17.8 cm (7 inches), with around 17.8 cm (7 inches) being typical. The other flange (29) may be shorter to fit a window, with a typical width being from around 7.6 cm (3 inches) to around 15.2 cm (6 inches).

The piece can be supplied with several different sized flanges to fit different construction situations. As with the other pieces, the thickness of the flange can be from thinner than 0.4 mm (0.015 inches) to much thicker. The edges of the flanges (33)(29) are tapered for easy "killing" by the worker. The support member can be from about 12.7 cm (5 inches) on a 17.8 cm (7 inch) flange and can take a similar ratio on a different sized flange. The spacer (30) can be any durable material, and can be around 1.0 cm (3/8 inch) thick. Other sizes are possible to match the needs of the construction. The length of the piece can be a standard 2.44 m or 3.05 m (8 or 10 foot), or any other length dictated by the construction.

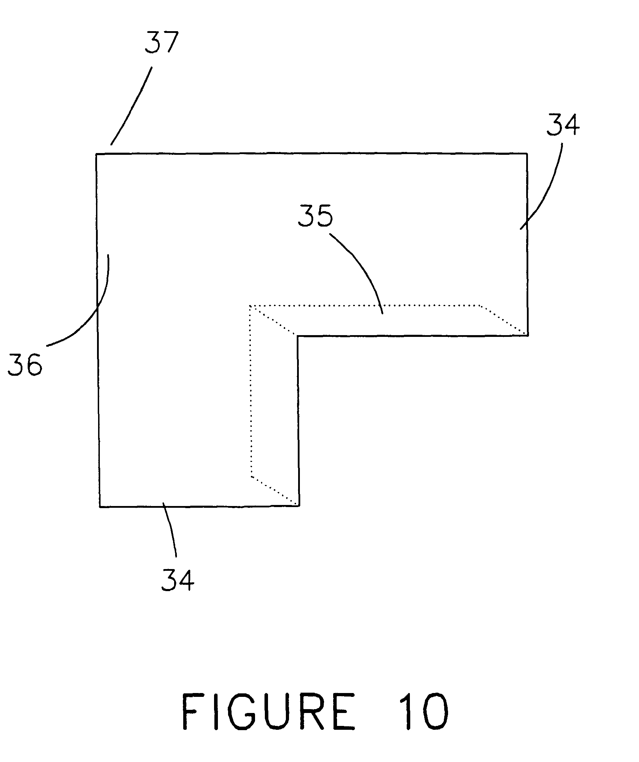

Figure 10 shows a specialty piece which is an embodiment of the invention similar to that shown in figure 8 except that this piece is specially shaped to continue the window trim piece of figure 9. Here, there is only one side (36) that fits the window corner. A right angle extension (35) follows the shape of the window corner. The edges (36) are tapered to make "killing" easier. The corner (37) can be rounded or any other shape as well as pointed. The exterior angles for right angle construction are around 89 degrees as in the previously described pieces. Again all outside seams can be straight, bullnose, or some other shape.

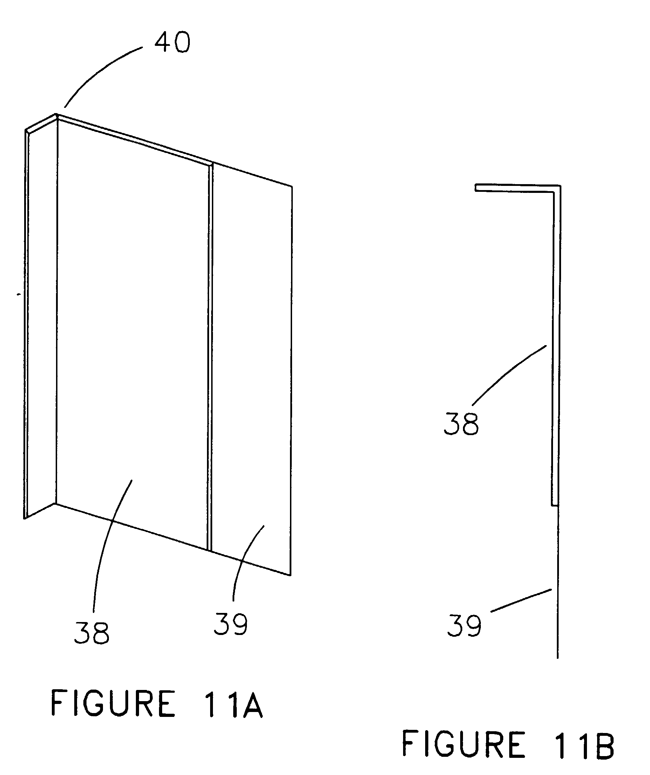

Figure 11 shows a non-coatable L-metal embodiment of the present invention. This piece is used under window sills, or wherever drywall abruptly ends such as an interface with brick. It is constructed like the previously described pieces. There is a wide flange (39) and a narrow flange. The narrow flange can be from around 1.3 cm (1/2 inch) to around 1.6 cm (5/8 inch) or greater. The wide flange can be from 7.6 cm (3 inches) to over 17.8 cm (7 inches). Again the length of the piece can be the standard 2.44 m or 3.05 m (8 or 10 foot), or any length dictated by the construction. The support member (38) is very similar to the support members of the previously described embodiments. With a 17.8 cm (7 inch) wide flange, it can be around 12.7 cm (5 inches). The flanges can be paper; however, the preferred method for this piece is to use paper covered plastic for shape and strength. As before, the outside corner can be straight, bullnose, or other shape. The corner angle (40) is usually around 89 degrees for right angle apparatuses or any other convenient angle.

The following describes a method of installing the various embodiments of the non-coatable, preformed drywall corner pieces. The worker first applies drywall mud to both flat sides of the corner to be finished. The preformed piece is cut to length and placed in the corner against the wet mud. The piece is positioned for final appearance and pressed into place; then the edges are "killed" by applying a small amount of finishing mud to the edges and smoothing them with a wide blade knife so that they merge into the surrounding drywall. There is no further finishing. When the mud drys, the corner is ready for painting or texturing since the outer surface of the preformed piece is prepared to receive paint or texture. This represents a considerable savings in time and money over existing methods. It also is possible to kill the edge a second time after the first mud has dried to attain a perfect finish.

### Industrial Applicability

The present invention is very useful in the drywall finishing trade. It allows a very rapid interior drywall finishing process since the pieces are prepared to receive paint or texture. The invention eliminates the sanding step which is very tedious and expensive; paint or texture is applied directly to the prepared surface. There is considerable savings in labor, time, and money when the present invention is used to finish interior and exterior seams and corners. The invention is especially useful in the construction of modern homes and office buildings where drywall is in common use.

## Claims

1. An apparatus used for finishing interior drywall seams in modern construction where drywall sheets are nailed to studs to form finished interior walls, comprising:
an elongated laminate strip having a first (1) and second (2) exterior surface, the elongated laminate strip comprising:
a first flexible layer (5);
a second flexible layer (5);
a semi-rigid support layer (6) bonded between said first and second flexible layer (5); characterised by:
a groove (7) cut longitudinally in said first exterior surface (1) along the length of said laminate strip;
said laminate strip folded along said groove (7) to form two flanges, said flanges making an acute angle with respect to said second exterior surface (2), each of said flanges having edges (3) either tapered or beveled on said second exterior surface (2) to allow application of drywall mud, whereby said second exterior surface (2) is prepared to receive paint or texture, and said first exterior surface (1) contacts said drywall seam.

2. An apparatus used for finishing exterior drywall seams in modern construction where drywall sheets are nailed to studs to form finished walls, comprising:
an elongated laminate strip having a first (2) and second (1) exterior surface, the elongated laminate strip comprising:
a first layer of flexible material (5);
a second layer of flexible material (5);
a semi-rigid support layer (6) bonded between said first and second layers (5); characterised by:
a groove (8) cut longitudinally in said first exterior surface (2) along the length of said laminate strip, said groove (8) being scored (7) along its length;
said laminate strip folded along said scored groove to form two flanges, said flanges making an acute angle with respect to said first exterior surface (2), each of said flanges having edges (3) either tapered or beveled on said second exterior surface (1) to allow application of drywall mud, whereby said second exterior surface (1) is prepared to receive paint or texture, and said first exterior surface (2) contacts said drywall seam.

3. The apparatus according to claim 1 or claim 2, wherein said first and second layers (5) are paper.

4. The apparatus according to claim 1 or claim 2, wherein said semi-rigid support layer (6) is plastic.

5. The apparatus of any one of claims 1 to 4, further comprising at least one pre-formed corner (4).

## Patentansprüche

1. Vorrichtung, die zur Fertigbearbeitung innerer Trockenwandfugen in der modernen Baukonstruktion verwendet wird, wobei die Trockenwandplatten an Pfosten genagelt werden, um die fertig bearbeitete innere Wand auszubilden, wobei die Vorrichtung umfasst:
eine längliche Laminatleiste, die eine erste (1) und eine zweite (2) äußere Fläche aufweist, wobei die längliche Laminatleiste umfasst:
eine erste elastische Schicht (5);
eine zweite elastische Schicht (5);
eine halbstarre Stützschicht (6), die zwischen der ersten und der zweiten elastischen Schicht (5) eingebunden ist; dadurch gekennzeichnet, dass
eine Nut (7) längs in der ersten äußeren Fläche (1) entlang der Länge der Laminatleiste eingeschnitten ist;
wobei die Laminatleiste entlang der Nut (7) gefaltet ist, um zwei Flansche auszubilden, wobei die Flansche einen spitzen Winkel in Bezug auf die zweite äußere Fläche (2) formen, wobei jeder der Flansche Kanten (3) aufweist, die an der zweiten äußeren Fläche (2) entweder verjüngt oder abgeschrägt sind, um die Anbringung von Trockenwandschlamm zu erlauben, wodurch die zweite äußere Fläche (2) vorbereitet wird, um Farbe oder Textur anzunehmen, und die erste äußere Fläche (1) die Trockenwandfuge berührt.

2. Vorrichtung, die zur Fertigbearbeitung äußerer Trockenwandfugen in der modernen Baukonstruktion verwendet wird, wobei die Trockenwandplatten an Pfosten genagelt werden, um die fertig bearbeiteten Wände auszubilden, wobei die Vorrichtung umfasst:
eine längliche Laminatleiste, die eine erste (2) und eine zweite (1) äußere Fläche aufweist, wobei die längliche Laminatleiste umfasst:
eine erste Schicht aus elastischem Material (5);
eine zweite Schicht aus elastischem Material (5);
eine halbstarre Stützschicht (6), die zwischen der ersten und der zweiten elastischen Schicht (5) eingebunden ist; dadurch gekennzeichnet, dass
eine Nut (8) längs in der ersten äußeren Fläche (2) entlang der Länge der Laminatleiste eingeschnitten ist, wobei die Nut (8) entlang ihrer Länge eingekerbt ist (7);
wobei die Laminatleiste entlang der eingekerbten Nut gefaltet ist, um zwei Flansche auszubilden, wobei die Flansche einen spitzen Winkel in Bezug auf die erste äußere Fläche (2) formen, wobei jeder der Flansche Kanten (3) aufweist, die an der zweiten äußeren Fläche (1) entweder verjüngt oder abgeschrägt sind, um die Anbringung von Trockenwandschlamm zu erlauben, wodurch die zweite äußere Fläche (1) vorbereitet wird, um Farbe oder Textur anzunehmen, und die erste äußere Fläche (2) die Trockenwandfuge berührt.

3. Vorrichtung nach Anspruch 1 oder 2, wobei die erste und die zweite Schicht (5) aus Papier sind.

4. Vorrichtung nach Anspruch 1 oder 2, wobei die halbstarre Stützschicht (6) aus Plastik ist.

5. Vorrichtung nach einem der Ansprüche 1 bis 4, wobei diese ferner wenigstens eine vorgeformte Ecke (4) umfasst.

## Revendications

1. Dispositif utilisé pour la finition de jointures de contre-mur intérieur dans une construction moderne dans laquelle des plaques de contre-mur sont clouées à des montants de façon à former des parois intérieures finies, comprenant :
une bande plate allongée présentant une première (1) et une deuxième (2) surfaces extérieures, la bande plate allongée comprenant :
une première couche flexible (5) ;
une deuxième couche flexible (5) ;
une couche de support semi-rigide (6) fixée entre lesdites première et deuxième couches flexibles (5) ;
caractérisé en ce que :
une gorge (7) est découpée longitudinalement dans ladite première surface extérieure (1) sur la longueur de ladite bande plate ;
ladite bande plate est pliée le long de ladite gorge (7) de façon à former deux rebords, lesdits rebords définissant un angle aigu par rapport à ladite deuxième surface extérieure (2), chacun desdits rebords présentant un bord (3) soit effilé, soit biseauté sur ladite deuxième surface extérieure (2) pour permettre l'application d'un enduit de contre-mur, de sorte que ladite deuxième surface extérieure (2) soit préparée pour recevoir de la peinture ou un revêtement, et ladite première surface extérieure (1) soit en contact avec ladite jointure de contre-mur.

2. Dispositif utilisé pour la finition de jointure de contre-mur extérieur dans une construction moderne dans laquelle des plaques de contre-mur sont clouées à des montants de façon à former des parois finies, comprenant :
une bande plate allongée présentant une première (2) et une deuxième (1) surfaces extérieures, la bande plate allongée comprenant :
une première couche d'un matériau flexible (5) ;
une deuxième couche d'un matériau flexible (5) ;
une couche de support semi-rigide (6) fixée entre lesdites première et deuxième couches (5) ;
caractérisé en ce que :
une gorge (8) est découpée longitudinalement dans ladite première surface extérieure (2) sur la longueur de ladite bande plate, ladite gorge (8) étant rainurée (7) sur sa longueur ;
ladite bande plate est pliée le long de ladite gorge rainurée pour former deux rebords, lesdits rebords définissant un angle aigu par rapport à ladite première surface extérieure (2), chacun desdits rebords présentant des bords (3) soit effilés, soit biseautés sur ladite deuxième surface extérieure (1) pour permettre l'application d'un enduit de contre-mur, de sorte que ladite deuxième surface extérieure (1) soit préparée pour recevoir de la peinture ou un revêtement, et ladite première surface extérieure (2) soit en contact avec ladite jointure de contre-mur.

3. Dispositif suivant la revendication 1 ou 2, dans lequel lesdites première et deuxième couches (5) sont du papier.

4. Dispositif suivant la revendication 1 ou 2, dans lequel ladite couche de support semi-rigide (6) est du plastique.

5. Dispositif suivant l'une quelconque des revendications 1 à 4, comprenant en outre au moins une pièce d'angle préformée (4).
